(19) Europäisches Patentamt
European Patent Office
Office européen des brevets

(11) **EP 1 434 453 B1**

(12) **FASCICULE DE BREVET EUROPEEN**

(45) Date de publication et mention de la délivrance du brevet:
**04.01.2017 Bulletin 2017/01**

(51) Int Cl.:
***H04W 16/18*** *(2009.01)*

(21) Numéro de dépôt: **03292821.0**

(22) Date de dépôt: **14.11.2003**

(54) **PROCÉDÉ ET SYSTÈME DE CRÉATION, GESTION ET EXPLOITATION DE CARTES DE RÉPARTITION DU TRAFIC D'UN RÉSEAU DE RADIOCOMMUNICATION**

VERFAHREN UND SYSTEM ZUR HERSTELLUNG, VERWALTUNG UND NUTZUNG VON VERHERHSVERTEILUNGKARTEN IN EINEM FUNKKOMMUNIKATIONNETZ

METHOD AND SYSTEM FOR CREATING, MANAGING AND USING TRAFFIC DISTRIBUTION MAPS IN A RADIO COMMUNICATION SYSTEM

(84) Etats contractants désignés:
**AT BE BG CH CY CZ DE DK EE ES FI FR GB GR HU IE IT LI LU MC NL PT RO SE SI SK TR**

(30) Priorité: **26.12.2002 FR 0216860**

(43) Date de publication de la demande:
**30.06.2004 Bulletin 2004/27**

(73) Titulaire: **SOCIETE FRANCAISE DU RADIO TELEPHONE (SFR)**
**75015 Paris (FR)**

(72) Inventeurs:
• **Fattouch, Imad**
  **75013 Paris (FR)**
• **Parniere, Stéphane**
  **78100 Saint Germain en Laye (FR)**
• **Vincent, François**
  **92140 Clamart (FR)**

(74) Mandataire: **Debay, Yves**
**Cabinet Debay**
**126 Elysée 2**
**78170 La Celle Saint Cloud (FR)**

(56) Documents cités:
**WO-A-00/36863     US-A- 5 293 640**

EP 1 434 453 B1

**Description**

La présente invention concerne les réseaux de radiotéléphonie cellulaire, et plus particulièrement, pour l'amélioration de la couverture radio dans un réseau géré par un opérateur, un procédé et un système de création, gestion et exploitation de cartes de répartition du trafic d'un réseau de radiocommunication tel le trafic circuit GSM.

Un réseau de radiotéléphonie cellulaire est constitué d'une pluralité de stations radioélectriques terrestres de base qui assurent la couverture radio de zones définissant des cellules respectives. Pour pouvoir établir les communications entre les terminaux radio mobiles circulant dans la zone d'une cellule et la station, il doit exister sur la station un circuit disponible. Pour cela, un dimensionnement du réseau radio doit être convenablement réalisé.

De manière connue, le dimensionnement d'un réseau d'accès radio, par exemple GSM, UMTS ou tout autre réseau radio, consiste :

- d'une part, à estimer le nombre et la configuration des différents éléments de réseau nécessaires à la fourniture d'un service mobile dans une région donnée (à l'échelle nationale ou régionale par exemple), le déploiement s'effectuant en plusieurs phases, généralement durant plusieurs années,

- et d'autre part, à proposer une typologie de réseau d'accès radio.

Quelle que soit la phase du plan de déploiement, les données de départ sont de trois sortes : données de couverture, données de trafic et données de qualité de service. Les données de couverture correspondent aux régions à couvrir, chaque région étant divisée en zones qui doivent être identifiées (par exemple en quatre catégories : urbaine dense, urbaine, suburbaine, rurale). Les conditions de propagation peuvent être déduites des données de couverture. Les données de trafic correspondent à la disponibilité du spectre de fréquence, à la densité d'abonnés par zone (par exemple 500 abonnés par $km^2$) et au profil de consommation des abonnés. Enfin les données concernant la qualité de service correspondent d'une part à des probabilités de couverture (par exemple 95% de probabilité que l'intensité du signal reçu soit supérieure à un certain seuil), des probabilités de blocage, délai maximal, débit minimal et d'autre part à des niveaux de service envisagés pour les différentes zones.

Un inconvénient des méthodes de dimensionnement de l'art antérieur est que la mobilité des abonnés n'est pas vraiment prise en compte. Les données de trafic n'informent qu'au mieux sur une densité statique des abonnés dans une zone. Pourtant, le dimensionnement pourrait être facilité et mieux adapté s'il pouvait tenir compte d'un trafic abonné écoulé en chaque endroit spécifique d'une région à couvrir, en prenant également en compte les disparités au sein d'une même zone.

Le document WO 00/36863 divulgue une méthode et un système d'allocation de bandes de fréquences dans un réseau de radiocommunication qui comporte un outil de géo-localisation et un moteur d'allocation de fréquence. L'outil de géo-localisation est prévu, d'une part, pour recevoir des données du réseau constitué d'une pluralité de zones géo-localisées et, d'autre part, estimer les paramètres de largeurs de bande pour effectuer une géolocalisation basée sur les données. Un système de planification est prévu pour travailler à partir d'un système de géo-localisation et à partir de cartes de trafic. Or, ce document n'enseigne pas un procédé de réalisation de ces cartes de répartition représentatives de la réalité du trafic.

Le document US A 5 293 640 divulgue un procédé de planification de fréquences de cellules radio utilisant des matrices d'interférence et allouant des canaux variant avec la demande de trafic et donc utilisant des cartes de trafic. Or, ce document n'enseigne pas de procédé de création de cartes de trafic.

La présente invention a donc pour premier objet de supprimer un ou plusieurs des inconvénients de l'art antérieur en définissant un procédé de création, gestion et exploitation de cartes de répartition du trafic des circuits de télécommunication mobile qui permet, en tenant compte de statistiques de trafic mesurées pour le dimensionnement radio, de fournir pour un réseau radio une carte d'informations représentative des évolutions et disparités de trafic.

Un autre objet de l'invention est de permettre, par exploitation de ces données représentatives d'une carte d'informations sur le trafic réel, le déploiement ou la modification de façon optimale de la couverture radio du réseau.

A cet effet, l'invention concerne un procédé de création, gestion et exploitation de cartes de répartition du trafic d'un réseau de radiocommunication mobile, destiné au déploiement de la couverture radio d'un réseau de radiotéléphonie cellulaire, au moyen d'un système informatique mémorisant des données représentatives de zones géographiques découpées en une pluralité de points ou pixels selon le découpage dudit réseau, des données représentatives du trafic dans le réseau de radiocommunication des abonnés audit réseau, caractérisé en ce que lesdites données représentatives du trafic dans le réseau de radiocommunication comprennent des mesures quantitatives et qualitatives du trafic des abonnés sur le réseau, lesdites mesures correspondant à au moins une tranche horaire déterminée, ledit procédé comportant les étapes suivantes :

- sélection d'au moins une zone géographique par des moyens interactifs entre l'utilisateur et ledit système,

- récupération et utilisation par ledit système de données représentatives du trafic correspondant à ladite zone géographique sélectionnée et à une tranche horaire déterminée pour former, par exploitation de ces données par le système informatique, au moins une carte de répartition du trafic du réseau de radiocommunication.

Selon une autre particularité de l'invention, les données représentatives du trafic dans le réseau de radiocommunication comprennent des données fournies par des moyens compteurs et extraites d'au moins un centre de supervision des équipements par des moyens d'extraction et de mise en table dudit système informatique.

Selon une autre particularité de l'invention, à chaque zone géographique mémorisée dans le système informatique correspond une pluralité de séries de mesures quantitatives et qualitatives du trafic, chaque série de mesures correspondant à une tranche horaire différente, le classement desdites séries de mesures en fonction des zones géographiques et des tranches horaires étant effectué par lesdits moyens d'extraction et de mise en table dans des tables spécifiques respectives stockées dans une mémoire du système informatique.

Selon une autre particularité, lesdites données représentatives du trafic comprennent la disponibilité du spectre de fréquence pour chaque zone géographique, lesdites mesures quantitatives et qualitatives du trafic des abonnés comportant notamment, pour chaque zone géographique, pour une tranche horaire déterminée :

- la densité moyenne du trafic écoulé en tout point de la zone,

- le taux de blocage d'accès au réseau en tout point de ladite zone.

L'invention permet ainsi de prendre en compte des données vraiment représentatives de la demande de trafic existant au sein du réseau actuel puisque le trafic réellement écoulé ainsi que les blocages sont pris en compte.

Selon une autre particularité, lesdites mesures quantitatives et qualitatives du trafic des abonnés comportent de plus, pour chaque zone géographique, pour une tranche horaire déterminée, le nombre de débuts d'appel en tout point de la zone.

Selon une autre particularité, ledit système informatique calcule un niveau de valeur du trafic des abonnés en tout point de la zone géographique sélectionnée, ledit niveau de valeur de trafic étant exprimé dans une unité de trafic représentative de l'occupation de ressources radio, les pixels étant représentés sur ladite zone de manière différente selon le niveau de valeur du trafic écoulé pour le pixel. L'unité de trafic peut être exprimée en milliErlang/km$^2$ (mE/km$^2$), pour le trafic circuit et en mégaoctets/hertz/km$^2$ pour le trafic de données.

Selon une autre particularité, une carte de répartition du trafic du réseau de radiocommunication mémorisée par ledit système informatique est couplée, en réponse à une sélection effectuée par des moyens interactifs entre l'utilisateur et ledit système, à une première base de données mémorisée dans ledit système qui comprend des données représentatives de la progression estimée du trafic à l'intérieur de chacun des pixels, ledit système sélectionnant dans ladite première base de données les données correspondant à ladite carte de répartition de trafic sélectionnée pour calculer, par des moyens de calcul dudit système, le trafic à écouler à l'intérieur de chacun des pixels.

Selon une autre particularité, les données représentatives de la progression estimée du trafic correspondent pour chaque pixel à une pondération fonction notamment de probabilités de service liées au niveau de champ dans le réseau, et du type de sursol, le système informatique affectant et mémorisant pour chaque pixel cette pondération.

Selon une autre particularité, une carte de répartition du trafic du réseau de radiocommunication mémorisée par ledit système informatique est couplée, en réponse à une sélection effectuée par des moyens interactifs entre l'utilisateur et ledit système, à une deuxième base de données mémorisée dans ledit système qui comprend des données géomarketing représentatives de zones géographiques pour pondérer des pixels regroupés dans des contours, le coefficient de pondération au sein des contours dépendant notamment de probabilités de service, fonctions du niveau de champ dans le réseau, et du type de sursol.

Selon une autre particularité, une carte du trafic à écouler est générée par lesdits moyens de calcul à partir de l'exploitation et du couplage des données de ladite carte de répartition du trafic avec les données de progression de trafic mémorisées dans une base de données des moyens de mémorisation.

Selon une autre particularité, une phase de modélisation de la couverture radio est paramétrée à l'aide de données, mémorisées dans le système, représentatives d'au moins un type de station radio et comprend les étapes suivantes qui s'appliquent à la zone géographique préalablement sélectionnée :

- sélection de données et paramètres de détermination de la zone de couverture radio correspondante dans un fichier de couverture des moyens de mémorisation dudit système, lesdits paramètres comprenant un pas de calcul de couverture,

- maillage sur ladite zone géographique sélectionnée des cellules de couverture associées à ladite zone de couverture radio, de façon à déterminer la capacité en trafic au sein de chaque cellule.

Selon une autre particularité, une étape d'identification de sous-zones à densifier est effectuée par les moyens de calcul dudit système informatique à la suite de la phase de modélisation de la couverture radio, par comparaison pour chaque pixel entre les données de trafic à écouler et les données représentatives de la capacité en trafic.

Selon une autre particularité, une étape d'identification de sous-zones de réseau à densifier est effectuée par les moyens de calcul dudit système informatique à la suite de la phase de modélisation de la couverture radio, par comparaison pour chaque contour entre le trafic à écouler et la capacité en trafic, la différence entre trafic à écouler et capacité en trafic dépassant un seuil déterminé au sein desdites sous-zones.

Selon une autre particularité, une étape d'identification de sous-zones à surplus de capacité est effectuée par les moyens de calcul dudit système informatique à la suite de la phase de modélisation de la couverture radio, par comparaison pour chaque pixel entre le trafic à écouler et la capacité en trafic.

Selon une autre particularité, la différence entre trafic écoulé et capacité en trafic dans une sous-zone est réduite par ajustement, ajout ou suppression par l'utilisateur d'au moins un équipement d'émission réception situé dans la cellule la plus performante, dite serveur principal, pour ladite sous-zone, déclenchant une reconfiguration de la modélisation du réseau sur le système informatique (1) et une mémorisation de la modification correspondante.

Un autre but de l'invention est d'apporter une solution à un ou plusieurs des problèmes rencontrés dans l'art antérieur en définissant un système informatique, spécialement adapté au procédé selon l'invention, pour améliorer la couverture radio d'un réseau de radiotéléphonie cellulaire.

Ce but est atteint par un système informatique pour la mise en oeuvre du procédé selon l'invention, comportant des moyens de mémorisation, des moyens de sélection et des moyens de calcul, lesdits moyens de mémorisation comportant dans une première mémoire des données représentatives de zones géographiques découpées en une pluralité de points ou pixels selon le découpage dudit réseau et dans une seconde mémoire des données représentatives du trafic d'un réseau de radiocommunication à au moins une tranche horaire déterminée audit réseau, le dit système étant caractérisé en ce qu'il comporte:

- des moyens interactifs entré l'utilisateur et ledit système, reliés aux moyens de sélection pour sélectionner et afficher au moins une desdites zones géographiques,

- des moyens de superposition à ladite zone géographique sélectionnée de données représentatives du trafic à une tranche horaire déterminée pour former au moins une carte de répartition du trafic, affichée par lesdits moyens interactifs,

- des moyens d'extraction et de mise en table, à partir de données fournies par des moyens compteurs et extraites d'au moins un centre de supervision des équipements, de séries de mesures en fonction des zones géographiques et des tranches horaires.

Selon une autre particularité de l'invention, lesdites données représentatives du trafic comprennent les disponibilités du spectre de fréquence, des mesures quantitatives et qualitatives du trafic des abonnés, lesdites mesures incluant :

- la densité moyenne du trafic en tout point de la zone,

- le taux de blocage d'accès au réseau en tout point de ladite zone,

- le nombre de débuts d'appel en tout point de la zone.

Selon une autre particularité, lesdits moyens de calcul sont reliés aux moyens de mémorisation pour calculer, à partir desdites données représentatives du trafic, la valeur du trafic écoulé en tout point d'une zone géographique sélectionnée par lesdits moyens de sélection.

Selon une autre particularité, lesdits moyens de mémorisation comprennent des mémoires pour stocker respectivement au moins un fichier contenant des données de géomarketing, au moins un fichier contenant des données de détermination de la couverture radio du réseau, au moins un fichier de données représentatives de la progression estimée du trafic en tout point ou pixel du réseau, et au moins un fichier de configuration comprenant des paramètres d'entrée saisis par l'utilisateur par l'intermédiaire desdits moyens interactifs, lesdites données- de géomarketing comprenant des éléments de pondération de chacun des pixels, notamment des probabilités de service, fonctions du niveau de champ dans le réseau, et différents types de sursol.

Selon une autre particularité de l'invention, lesdits moyens de calcul sont reliés à des moyens d'extraction des données du fichier de données marketing et/ou du fichier de données de progression du trafic pour calculer en tout point de ladite zone sélectionnée la valeur du trafic à écouler, l'ensemble des valeurs du trafic à écouler de la zone sélectionnée étant stocké dans lesdits moyens de mémorisation.

Selon une autre particularité, lesdites données de détermination de la couverture radio du réseau comprennent des données représentatives d'au moins un type de station radio, lesdits moyens de sélection sélectionnant les données représentatives de zones de couverture radio et les paramètres d'entrée correspondant à la zone sélectionnée pour permettre aux moyens de calcul de fournir la capacité en trafic en tout point de ladite zone.

Selon une autre particularité, lesdits moyens de calcul comprennent un module de comparaison des valeurs entre le trafic à écouler et la capacité en trafic, en tout point d'une zone sélectionnée par lesdits moyens de sélection, permettant la détermination de sous-zones de réseau à densifier.

Selon une autre particularité, les paramètres d'entrée saisis par l'intermédiaire d'une interface utilisateur/système des moyens interactifs comprennent notamment un pas de calcul de couverture.

L'invention, avec ses caractéristiques et avantages, ressortira plus clairement à la lecture de la description faite en référence aux dessins annexés donnés à titre d'exemples non limitatifs dans lesquels :

- la figure 1 représente schématiquement le système informatique selon l'invention et une carte géographique avec répartition du trafic obtenue par le procédé selon l'invention,

- la figure 2 représente un exemple de processus à plusieurs étapes mis en oeuvre dans l'invention pour la création et l'exploitation de cartes de répartition du trafic.

Le procédé selon l'invention intervient dans la phase d'établissement du réseau radio cible dans une zone géographique et permet de créer différentes cartes de trafic. Le procédé selon l'invention consiste notamment à utiliser les informations de trafic obtenues avec le réseau déjà existant pour prévoir un déploiement judicieux de la couverture radio.

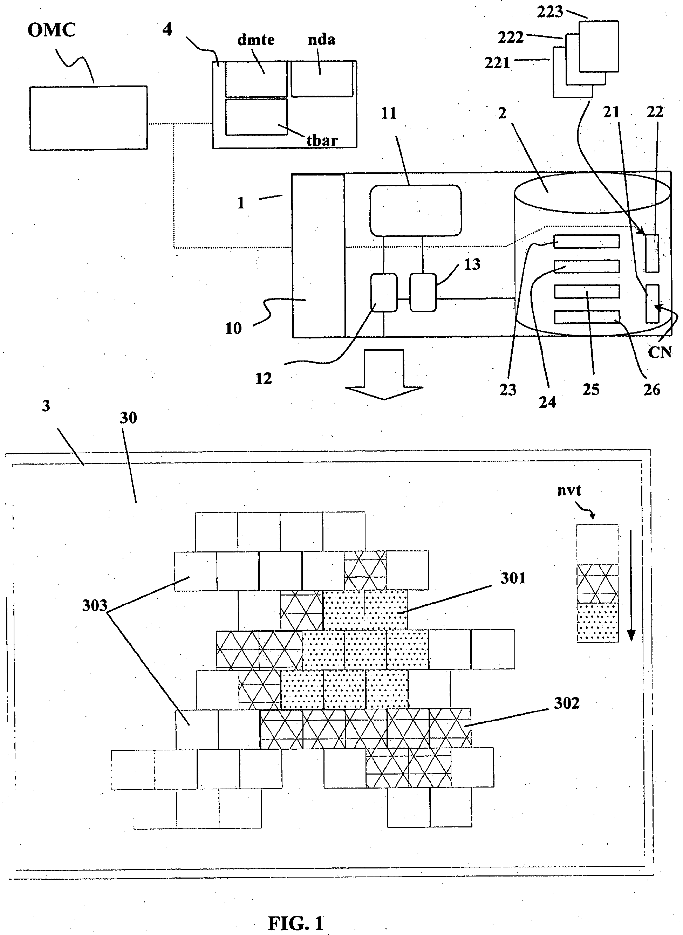

La figure 1 montre, sur un dispositif interactif (3) de saisie et affichage d'un système informatique (1), une représentation graphique d'une carte (30) de répartition du trafic circuit de radiocommunication dans une zone géographique pour laquelle le réseau cible est en cours de définition. La carte (30) représente graphiquement une superposition de données entre d'une part des premières données d'une carte numérique (CN), stockées dans une base de données (21) de moyens de mémorisation (2) du système informatique (1), et d'autre part des données représentatives du trafic circuit de radiocommunication des abonnés au réseau, stockées dans une autre base de données (22) des moyens de mémorisation (2). Les moyens de traitement ou de calcul (11), ou unité centrale, les moyens de mémorisation (2), ainsi que les moyens de saisie par un clavier avec souris ou un autre dispositif et de présentation de données par un écran d'affichage interactif (3), n'ont pas été représentés en détail.

Les premières données numériques permettent de spécifier un découpage de la zone géographique en une pluralité de points ou pixels selon le découpage du réseau. Le processus mis en oeuvre dans l'invention nécessite une analyse concrète du trafic actuel existant afin d'estimer de manière fiable les besoins en trafic au sein du réseau radio déjà en place. En effet, l'analyse du réseau existant permet d'identifier les problèmes rencontrés sur la couverture radio d'une zone géographique étudiée. Le réseau appelé cible à définir doit tenir compte de cette analyse pour éliminer la majeure partie ou la totalité de ces problèmes. Pour cela, les données représentatives du trafic des circuits de radiocommunication comprennent des données fournies par des moyens compteurs (4) et extraites d'au moins un centre de supervision des équipements (OMC) par des moyens (10) d'extraction et des moyens de mise en table exploités par le système informatique (1). Ces données extraites peuvent consister en des moyennes de mesures du trafic ou en plusieurs séries de mesures quantitatives et qualitatives du trafic, réparties en différents points de la zone géographique étudiée. Chaque série de mesures correspond par exemple à une tranche horaire différente pour une même localisation. Dans un mode de réalisation de l'invention, les moyens (10) d'extraction et de mise en table permettent de classer les mesures en fonction des cartes géographiques et des tranches horaires. Dans l'exemple non limitatif d'un réseau GSM, la mesure unitaire du trafic se situe au niveau de la cellule.

Dans un mode de réalisation de l'invention, les données sur le trafic actuel sont fournies par des moyens compteurs (4) de type APIC (Analyse de la Performance à partir d'Indicateurs et Compteurs). Ces moyens compteurs (4) permettent de stocker durant plusieurs semaines les compteurs des centres de supervision (OMC) et peuvent fournir des indicateurs complexes à partir de l'évolution de ces compteurs. Un outil de type APIC permet par exemple de consolider au niveau national l'extraction des compteurs des différents centres de supervision (OMC). Les mesures sont par exemple des moyennes calculées à partir des mesures prises en tout point ou pixel sur une semaine et peuvent être regroupées dans une base de données (22) des moyens de mémorisation (2) sous la forme de fichiers ou tables de trafic (221, 222, 223). Un des fichiers de trafic (221) correspond par exemple au trafic à l'heure chargée de la semaine, un autre fichier (222) correspond au trafic hebdomadaire, et un dernier fichier (223) correspond au trafic moyenné sur quatre semaines. Chacun de ces fichiers peut contenir l'ensemble des pixels de cellule du réseau national. La carte numérique (CN) correspond, dans une variante de réalisation, à la carte géographique nationale. Cette carte numérique (CN) peut être subdivisée en une pluralité de cartes de départements, l'utilisateur devant simplement sélectionner au départ le département désiré avec le dispositif d'interface (3). D'autres types de découpages de carte peuvent naturellement être envisagés.

Une carte (30) de répartition du trafic circuit de radiocommunication peut donc être créée à l'aide du système informatique (1) selon l'invention, par calcul (52) en tout point géographique de la répartition du trafic de radiocommunication puis représentation en ce point de la carte des valeurs obtenues. Les moyens de calcul (11) sont reliés aux moyens de mémorisation (2) du système (1) pour utiliser les données représentatives du trafic extraites des moyens compteurs (4) et calculer la valeur du trafic écoulé en tout point géographique de la carte sélectionnée. Au moins un des fichiers de trafic est sélectionné par des moyens de sélection (12) couplés au dispositif interactif (3) de saisie/affichage et actionnés par l'utilisateur, puis les données de fichier sont associées aux informations de la carte géographique numérisée qui est également sélectionnée par l'utilisateur, de manière analogue. Le système informatique (1) comprend par exemple des moyens de superposition des données de carte numérique (CN) et des données de trafic pour former la carte de répartition du trafic (30). Un pas de résolution pouvant être compris entre 5 et 500 mètres est rentré en paramètre par une action de sélection ou de saisie de l'utilisateur à l'aide du dispositif interactif (3), dans un fichier de configuration (25) stocké dans les moyens de mémorisation (2). Comme illustré à la figure 1, cette carte de répartition du trafic (30) est affichée par le dispositif interactif (3) et représente des pixels (301, 302, 303) représentatifs du trafic actuel. Dans le mode de réalisation de la figure 1, les pixels (301, 302, 303) associent une couleur d'identification ou une trame graphique ou analogue en fonction de chaque niveau de valeur de trafic (nvt), exprimé en $mE/km^2$ ou unité équivalente de trafic représentative de l'occupation de ressources radio. Par exemple, les pixels (301) correspondant à un trafic entre 10000 et 30000 $mE/km^2$ sont représentés en couleur chaude en trame foncée, les pixels (302) correspondant à un trafic moindre supérieur à 500 $mE/km^2$ sont représentés en couleur chaude claire et les pixels (303) à faible trafic avec une autre couleur. De manière non limitative, une gradation beaucoup plus étroite des niveaux de valeur de trafic (nvt) est préférentiellement envisagée pour permettre une meilleure analyse du réseau.

La carte de répartition du trafic (30) ainsi obtenue présente l'avantage d'être indépendante du système ou de l'infrastructure de radiocommunication utilisée et du réseau cellulaire correspondant, ce qui permet de prévoir efficacement le trafic quand on change de système.

Dans une variante de réalisation de l'invention, les données représentatives du trafic circuit de radiocommunication comprennent notamment la disponibilité du spectre de fréquence pour chaque point d'une carte géographique. Dans un mode de réalisation de l'invention, les mesures quantitatives et qualitatives du trafic des abonnés, issues des moyens compteurs (4) présentés à la figure 1, comportent la densité moyenne du trafic écoulé (dmte) en tout point de la carte et le taux de blocage d'accès au réseau (tbar) en tout point de ladite carte. Ainsi, pour chaque zone géographique, et pour une tranche horaire déterminée, le trafic actuellement demandé peut être estimé. En effet, le trafic actuellement demandé découle de ces mesures puisqu'il est calculé de la façon suivante :

$$\text{Trafic actuellement demandé} = \text{Trafic écoulé} \times (1 + \text{Taux de blocage}/2)$$

De façon analogue, lesdites mesures quantitatives et qualitatives de trafic peuvent aussi comprendre le nombre de débuts d'appel (nda) en tout point de la carte. Dans le procédé selon l'invention, le trafic actuellement demandé peut ainsi servir de base pour estimer ensuite le trafic cible à écouler, dans le cadre de la phase d'établissement du réseau radio cible. Dans une variante, le trafic mesuré peut être simplement un trafic de données ou une combinaison du trafic circuit et du trafic de données.

De manière avantageuse, le procédé selon l'invention permet d'estimer le trafic cible à écouler à partir d'informations issues du terrain, telles que les mesures susmentionnées. Le dimensionnement du réseau cible peut être par exemple calculé avec un temps d'anticipation de plusieurs mois. Pour anticiper également l'évolution correspondante du trafic, un coefficient multiplicateur appelé dans ce qui suit coefficient de progression de trafic est déterminé et utilisé pour pondérer le niveau de valeur des pixels. Dans un premier mode de réalisation de l'invention, une carte (30) de répartition du trafic circuit de radiocommunication, correspondant par exemple à un département, peut être mémorisée dans les moyens de mémorisation (2) par ledit système informatique (1). Cette carte de répartition (30) peut ensuite être couplée, en réponse à une sélection effectuée à l'aide du dispositif interactif (3), à une première base de données mémorisée dans ledit système (1) qui comprend des données représentatives de la progression estimée du trafic à l'intérieur de chacun des pixels. Les moyens de sélection (12) du système (1) permettent de récupérer (51) des données dans ladite première base de données les données. Ces données correspondent à la carte de répartition de trafic sélectionnée pour calculer, avec les moyens de calcul (11) dudit système (1), le trafic à écouler à l'intérieur de chacun des pixels. Les données représentatives du coefficient de progression du trafic estimé correspondent à une pondération fonction notamment de probabilités de service liées au niveau de champ dans le réseau et du type de sursol. Le système informatique (1), après avoir effectué la pondération pour l'ensemble des pixels de la carte sélectionnée, mémorise les nouveaux niveaux de valeur de trafic (nvt) pour chacun des pixels. Le système peut éventuellement prendre en compte une probabilité de recouvrement entre cellules.

La pondération due au sursol permet de tenir compte de la distribution réelle de trafic qui varie selon la classe de sursol et éventuellement le type d'axe de circulation. Cette pondération est par exemple obtenue à partir d'un fichier stocké dans les moyens de mémorisation (2) qui se présente sous la forme d'une matrice de pondération, comme représenté ci-dessous.

| Type de sursol | Pas d'information | Eau | Surface minérale | Espace ouvert | Forêt | Urbain < 10 hab/km² | Urbain < 50 hab/km² | Urbain < 100 hab/km² | Urbain < 200 hab/km² | Urbain < 300 hab/km² | Urbain < 400 hab/km² | Urbain < 500 hab/km² | Urbain < 600 hab/km² | Urbain < 800 hab/km² | Urbain < 1000 hab/km² | Urbain > 1000 hab/km² |
|---|---|---|---|---|---|---|---|---|---|---|---|---|---|---|---|---|
| Classe de sursol | 0 | 1 | 2 | 3 | 4 | 5 | 6 | 7 | 8 | 9 | 10 | 11 | 12 | 13 | 14 | 15 |
| Pas d'axe | 0 | 1 | 1 | 1 | 1 | 5 | 5 | 5 | 8 | 8 | 10 | 10 | 10 | 10 | 10 | 10 |
| Autoroutes | 0 | 10 | 10 | 10 | 10 | 20 | 20 | 20 | 20 | 20 | 20 | 25 | 25 | 25 | 25 | 25 |
| Nationales | 0 | 4 | 4 | 4 | 4 | 10 | 10 | 10 | 16 | 16 | 16 | 16 | 20 | 20 | 20 | 20 |
| Voies ferrées | 0 | 4 | 4 | 4 | 4 | 8 | 8 | 10 | 15 | 15 | 15 | 15 | 20 | 20 | 20 | 20 |
| Départementales | 0 | 3 | 3 | 3 | 3 | 8 | 8 | 10 | 15 | 15 | 15 | 15 | 18 | 18 | 18 | 18 |
| Routes locales | 0 | 2 | 2 | 2 | 2 | 8 | 8 | 10 | 15 | 15 | 15 | 15 | 18 | 18 | 18 | 18 |
| Rues principales | 0 | 1 | 1 | 1 | 1 | 5 | 5 | 5 | 8 | 8 | 10 | 12 | 15 | 15 | 15 | 15 |
| Rues secondaires | 0 | 1 | 1 | 1 | 1 | 5 | 5 | 5 | 8 | 8 | 10 | 12 | 15 | 15 | 15 | 15 |

Dans un deuxième mode de réalisation de l'invention, une carte de répartition du trafic circuit de radiocommunication mémorisée sous forme de fichier par ledit système informatique (1) est couplée à une deuxième base de données dudit système (1) qui comprend des données géomarketing représentatives de cartes géographiques marketing pour pondérer des pixels (301, 302, 303) regroupés dans des contours, la pondération au sein des contours dépendant notamment de probabilités de service, fonctions du niveau de champ dans le réseau, et du type de sursol. Dans des variantes de réalisation, la carte numérique (CN) spécifie notamment les reliefs naturels et artificiels, ainsi que leur nature, telle que forêt, immeubles et autres, ce qui permet de calculer une estimation de l'atténuation radio de la liaison affectée par les reliefs. Les moyens de calcul (11) peuvent être associés à des moyens d'extraction (13) et de sélection des données du fichier (23) de données marketing et/ou du fichier (24) de données de progression du trafic, par intervention de l'utilisateur sur une interface, pour calculer en tout point de ladite carte sélectionnée la valeur du trafic à écouler. Dans un mode de réalisation de l'invention, les coefficients de progression de trafic sont notamment fonctions de données marketing, éventuellement paramétrables par l'utilisateur à l'aide d'une interface interactive avec le système informatique (1), stockées dans le fichier marketing (23) des moyens de mémorisation (2) du système informatique (1). L'ensemble des valeurs du trafic à écouler de la carte sélectionnée peut être stocké dans la base de données (22) de trafic desdits moyens de mémorisation (2).

Selon un mode de réalisation préféré, le fonctionnement de l'invention requiert préalablement la saisie d'une pluralité de paramètres d'entrée dans le fichier de configuration (25). Ceci afin que le système informatique (1) prenne en compte certains fichiers mémorisés dans les moyens de mémorisation (2). Ainsi des paramètres tels que le nom du fichier relatif à la subdivision en département de la carte numérique (CN), le nom du fichier relatif aux spécifications du marketing, le nom du fichier de trafic, le nom et éventuellement le chemin du fichier de couverture de référence, doivent être saisis. Dans une variante de réalisation, plusieurs tracés de contours délimitant des zones définies par classe de marketing peuvent être associés à la carte de répartition de trafic. Dans ces contours, toutes les cellules appartiennent à une même classe de marketing. L'opérateur fixe par exemple l'usage du dispositif interactif (3) du système (1) par différentes valeurs de niveau de champ cible qui permettent de différencier des niveaux d'exigence entre des classes marketing de contours. Selon le type de contour dans lequel se situe un pixel, la pondération sera plus ou moins élevée. Dans un mode de réalisation de l'invention, la disponibilité du spectre de fréquence peut constituer un paramètre supplémentaire du fichier de configuration.

Le tableau ci-dessous illustre une possibilité de classification de contours délimitant des entités géographiques de nature différente et attribuant à chacune de ces entités une valeur type de contour VTC variant de façon croissante entre un niveau bas, référencé ci-dessous V27 de faible intérêt marketing, et un niveau haut référencé ci-dessous V1 de fort intérêt marketing. Ces entités sont donc définies selon un ordre de valeurs qui est fonction de leur intérêt marketing.

| Classe Marketing | VTC | Entité géographique |
|---|---|---|
| 1 | V1 | Agglomérations > 500 K hab./km$^2$ |
| 2 | V17 | 1ère Couronne |
| 3 | V2 | Agglomérations > 10 K hab./km$^2$ dans premières couronnes |
| 4 | V3 | Agglomérations et communes > 2 K hab./km$^2$ dans premières couronnes |
| 5 | V4 | Agglomérations > 200 K hab./km$^2$ |
| 6 | V18 | 1ère Couronne |
| 7 | V5 | Agglomérations > 10 K hab./km$^2$ dans premières couronnes |
| 8 | V6 | Agglomérations et communes > 2 K hab./km$^2$ dans premières couronnes |
| 9 | V7 | Agglomérations > 100 K hab./km$^2$ |
| 10 | V19 | 1 ère Couronne |
| 11 | V8 | Agglomérations > 10 K hab./km$^2$ dans premières couronnes |
| 12 | V9 | Agglomérations et communes > 2K hab./km$^2$ dans premières couronnes |
| 13 | V10 | Agglomérations > 50 K hab./km$^2$ |
| 14 | V20 | 1ère Couronne |
| 15 | V11 | Agglomérations > 10 K hab./km$^2$ dans premières couronnes |
| 16 | V12 | Agglomérations et communs > 2K hab./km$^2$ dans premières couronnes |
| 17 | V13 | Agglomérations > 20 K hab./km$^2$ |
| 18 | V14 | Agglomérations > 10 K hab./km$^2$ |
| 19 | V16 | Zones d'accueil > 500 résidences secondaires |
| 20 | V15 | Agglomérations et communes > 2 K hab./km$^2$ |
| 21 | V21 | Axes > 8000 Voitures/Jour |
| 22 | V22 | Axes > 4000 V/J |
| 23 | V25 | Communes > 1 K hab./km$^2$ |
| 24 | V23 | Axes > 2000 V/j |
| 25 | V24 | Bande littorale de 10km |
| 26 | V26 | Reste non montagneux, non forestier |
| 27 | V27 | reste |

Dans un troisième mode de réalisation de l'invention, la pondération peut être identique pour toutes les cellules, un seul coefficient de progression étant donc utilisé. Le coefficient de progression peut être tout simplement entré par l'utilisateur comme un des paramètres d'entrée dans une variante de réalisation.

Le processus selon l'invention consiste alors à utiliser (53) les données représentatives de la progression du trafic pour générer une carte (31) du trafic cible à écouler. Les moyens de calcul (12) du système (1) permettent de coupler la carte de répartition du trafic (30) avec les données de progression de trafic issues d'informations de géomarketing. La carte (31) ainsi obtenue est affichée à l'aide de moyens d'affichage du dispositif interactif (3) et permet de visualiser les zones pour lesquelles la densité de trafic va augmenter.

Dans un mode de réalisation de l'invention, une phase de modélisation de la couverture radio (61) est paramétrée à l'aide de données représentatives d'au moins un type de station radio. Cette phase comprend la récupération, par l'intermédiaire des moyens de sélection (12), de données et paramètres (60) de détermination de la carte de couverture radio correspondant à la carte géographique préalablement sélectionnée. Le système informatique (1) permet de prendre en compte une probabilité de recouvrement entre cellules. Ces données et paramètres sont mémorisés dans un fichier de couverture (26) des moyens de mémorisation (2). Les paramètres comprennent notamment un pas de calcul de couverture. Puis un maillage est réalisé sur la carte géographique sélectionnée par des cellules de couverture associées à ladite carte de couverture radio de référence, de façon à déterminer la capacité en trafic au sein de chaque cellule. Dans un mode de réalisation de l'invention, un fichier de trafic écoulable est créé en répartissant de manière homogène les équipements d'émission réception dans les cellules et en définissant un taux de blocage déterminé. Une carte de capacité en trafic (32) peut alors être générée.

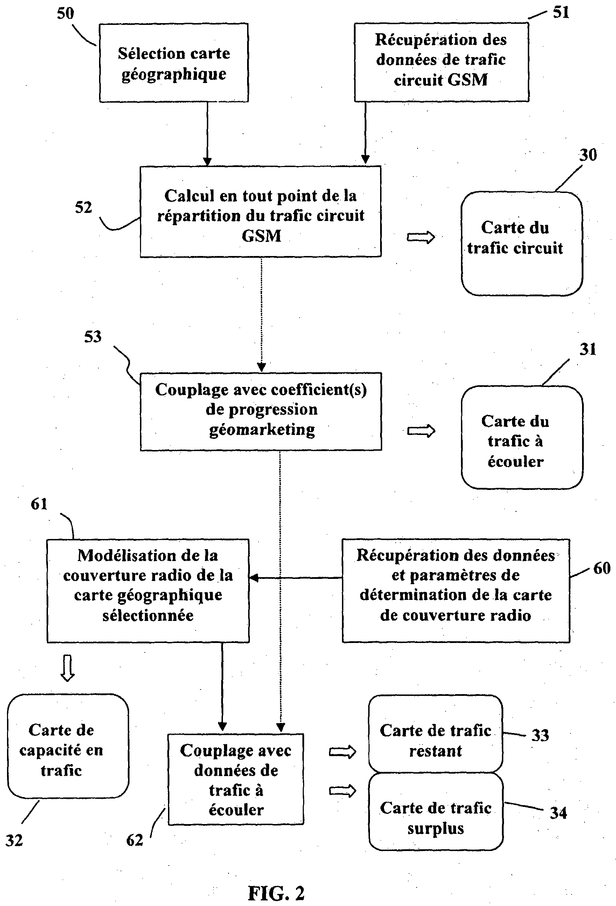

Le procédé selon l'invention peut être avantageusement exploité pour conduire à une étape d'identification de sous-zones à densifier. L'identification de telles sous-zones peut être effectuée par les moyens de calcul (11) dudit système informatique (1) à la suite de la phase de modélisation de la couverture radio (61). Pour cela, les moyens de calcul couplent (62) les données de trafic à écouler avec les données de couverture modélisée et comparent par exemple pour chaque pixel (301, 302, 303) la valeur de trafic à écouler et la capacité en trafic du réseau. Comme schématiquement illustré à la figure 2, il est ainsi possible de créer facilement une carte de trafic restant (33), en attribuant à chaque pixel affiché à l'aide du moyen d'affichage du dispositif d'interface (3) une valeur représentative d'un trafic restant pour le point géographique représenté par le pixel. En variante, l'étape d'identification de sous-zones de réseau à densifier peut aussi être effectuée pour chaque contour défini par le marketing, par comparaison entre le trafic à écouler et la capacité en trafic. Dans un mode de réalisation de l'invention, le système (1) peut permettre de délimiter ces sous-zones en fonction d'un seuil de différence positif déterminé entre trafic à écouler et capacité en trafic. Ces sous-zones ainsi identifiées correspondent à un sous-dimensionnement du réseau qui doit être pris en compte pour la définition du réseau cible.

De manière analogue, le procédé selon l'invention peut être avantageusement exploité pour conduire à une étape d'identification de sous-zones à surplus de capacité. Une carte de surplus (34) de capacité de trafic peut être ainsi créée pour visualiser sur un moyen d'affichage du dispositif interactif (3) tous les endroits où le réseau est surdimensionné par rapport à la demande en trafic réelle. Dans un mode de réalisation de l'invention, l'identification de ces zones peut être facilitée par l'emploi d'une représentation graphique différente, par exemple un niveau de couleur élevé. Sur une carte de trafic surplus (34), les zones sous-dimensionnées apparaissent par exemple en blanc et les zones surdimensionnées apparaîtront d'autant mieux que la différence entre capacité du réseau et le trafic à écouler est élevée. Dans une variante, la comparaison peut être effectuée pour chaque contour entre le trafic à écouler et la capacité en trafic. La différence obtenue entre trafic à écouler et capacité en trafic doit par exemple dépasser un seuil déterminé au sein des contours ainsi identifié comme une sous-zone de sous-dimensionnement. Il peut en être de même pour identifier des sous-zones de surdimensionnement. Dans un mode de réalisation, les moyens de calcul (11) du système (1) pourront comprendre un module de comparaison des valeurs entre le trafic à écouler et la capacité en trafic, en tout point d'une carte sélectionnée par lesdits moyens de sélection, pour permettre la détermination de telles sous-zones. L'utilisation d'un seuil haut de cette différence pour déterminer les zones de sous-dimensionnement, respectivement d'un seuil bas de valeur négative pour déterminer les zones de surdimensionnement, peut naturellement être envisagée. De tels seuils sont par exemple paramétrables par l'utilisateur et sont mémorisés dans le fichier de configuration. Avec des seuils d'amplitude différente, il est ainsi possible d'exploiter de telles cartes pour agir sur les équipements d'émission réception. La différence entre trafic écoulé et capacité en trafic dans une sous-zone localisée essentiellement sur une cellule est par exemple réduite par ajustement, ajout ou suppression par l'utilisateur d'au moins un équipement d'émission réception situé dans cette cellule. Plus généralement, cette action peut concerner au moins un équipement d'émission réception de la cellule la plus performante, dite serveur principal, pour ladite sous-zone. Une telle manipulation de la ressource radio est particulièrement aisée avec le système informatique (1) selon l'invention. Les changements effectués peuvent déclencher automatiquement une reconfiguration de la simulation du réseau sur le système (1) et une mémorisation de ces changements dans les moyens de mémorisation (2).

On comprend donc que l'invention contribue à repérer de manière fiable les zones, actuelles et futures, sources de points noirs ainsi que les zones difficiles à servir sur le plan de la capacité. L'exploitation de cartes de trafic permet de garantir une bonne qualité de service au moindre coût puisque les différents sites et équipements constituant la ressource radio pourront être optimisés à la fois de manière qualitative et quantitative.

Un des avantages de l'invention est de fournir une base de données directement exploitable. L'invention donne la possibilité de détecter aisément les "trous" dans le dimensionnement par rapport au trafic à écouler, les localisations à taux d'échecs/coupure élevé.

Un autre des avantages de l'invention est de faciliter l'ajustement des configurations des émetteurs/récepteurs de couverture en fonction de la manière dont évolue le trafic. L'invention fournit un outil d'aide à la décision, à l'échelle des cellules, sans qu'il y ait ensuite nécessité d'effectuer des pondérations ultérieures. A l'aide d'une carte de répartition du trafic (30) circuit GSM ou trafic de données, et connaissant la qualité de service souhaitée, il ne reste simplement qu'à calculer un nombre d'émetteurs-récepteurs (TRX) à installer pour les cellules. L'invention vise ainsi à satisfaire des besoins en couverture d'un réseau de tout type, tel que GSM, UMTS, etc.

Il est particulièrement avantageux d'exploiter une carte de répartition de trafic (30) indépendante du système de radiocommunication utilisé et du réseau cellulaire correspondant, ce qui permet de prévoir efficacement le trafic quand on change de système. Ainsi, selon le procédé de l'invention, il est possible d'utiliser les données de trafic analogique pour estimer le trafic GSM et utiliser les données de trafic GSM pour prévoir le trafic sur les cellules de réseau UMTS.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Revendications**

1. Procédé de création, gestion et exploitation de cartes de répartition du trafic d'un réseau de radiocommunication mobile, destiné au déploiement de la couverture radio d'un réseau de radiotéléphonie cellulaire, au moyen d'un système informatique (1) mémorisant des données représentatives de zones géographiques découpées en une pluralité de points ou pixels (301, 302, 303) selon le découpage dudit réseau, des données représentatives du trafic dans le réseau de radiocommunication des abonnés audit réseau, **caractérisé en ce que** lesdites données représentatives du trafic dans le réseau de radiocommunication comprennent des mesures quantitatives et qualitatives du trafic des abonnés sur le réseau, lesdites mesures correspondant au moins une tranche horaire déterminée, ledit procédé comportant les étapes suivantes :

   - sélection (50) d'au moins une zone géographique par des moyens interactifs (3) entre l'utilisateur et ledit système,
   - récupération (51) et utilisation par ledit système (1) de données représentatives du trafic correspondant à ladite zone géographique sélectionnée et à une tranche horaire déterminée pour former, par exploitation de ces données par le système informatique, au moins une carte (30) de répartition du trafic du réseau de radiocommunication.

2. Procédé selon la revendication 1, dans lequel les données représentatives du trafic dans le réseau de radiocommunication comprennent des données fournies par des moyens compteurs (4) et extraites d'au moins un centre de supervision des équipements (OMC) par des moyens d'extraction et de mise en table (10) dudit système informatique (1).

3. Procédé selon la revendication 2, **caractérisé en ce qu'**à chaque zone géographique mémorisée dans le système informatique (1) correspond une pluralité de séries de mesures quantitatives et qualitatives du trafic, chaque série de mesures correspondant à une tranche horaire différente, le classement desdites séries de mesures en fonction des zones géographiques et des tranches horaires étant effectué par lesdits moyens d'extraction et de mise en table (10) dans des tables spécifiques respectives (221, 222, 223) stockées dans une mémoire (22) du système informatique (1).

4. Procédé selon l'une quelconque des revendications 1 à 3, dans lequel lesdites données représentatives du trafic comprennent la disponibilité du spectre de fréquence pour chaque zone géographique, lesdites mesures quantitatives et qualitatives du trafic des abonnés comportant notamment, pour chaque zone géographique, pour une tranche horaire déterminée :

   - la densité moyenne du trafic écoulé (dmte) en tout point de la zone,
   - le taux de blocage d'accès au réseau (tbar) en tout point de ladite zone.

5. Procédé selon la revendication 4, dans lequel lesdites mesures quantitatives et qualitatives du trafic des abonnés comportent de plus, pour chaque zone géographique, pour une tranche horaire déterminée, le nombre de débuts d'appel (nda) en tout point de la zone.

6. Procédé selon l'une quelconque des revendications 1 à 5, dans lequel ledit système informatique (1) calcule un niveau de valeur du trafic (nvt) des abonnés en tout point de la zone géographique sélectionnée, ledit niveau de valeur de trafic (nvt) étant exprimé dans une unité de trafic représentative de l'occupation de ressources radio, les pixels (301, 302, 303) étant représentés sur ladite zone de manière différente selon le niveau de valeur du trafic écoulé pour le pixel.

7. Procédé selon l'une quelconque des revendications 1 à 6, dans lequel une carte (30) de répartition du trafic du réseau de radiocommunication mémorisée par ledit système informatique (1) est couplée (53), en réponse à une sélection effectuée par des moyens interactifs (3) entre l'utilisateur et ledit système (1), à une première base de données mémorisée dans ledit système qui comprend des données représentatives de la progression estimée du trafic à l'intérieur de chacun des pixels, ledit système (1) sélectionnant dans ladite première base de données les données correspondant à ladite carte (30) de répartition de trafic sélectionnée pour calculer, par des moyens de calcul (11) dudit système (1), le trafic à écouler à l'intérieur de chacun des pixels (301, 302,303).

8. Procédé selon la revendication 7, dans lequel les données représentatives de la progression estimée du trafic correspondent pour chaque pixel (301, 302, 303) à une pondération fonction notamment de probabilités de service liées au niveau de champ dans le réseau, et du type de sursol, le système informatique (1) affectant et mémorisant pour chaque pixel (301, 302, 303) cette pondération.

9. Procédé selon l'une quelconque des revendications 1 à 6, dans lequel une carte (30) de répartition du trafic mémorisée par ledit système informatique (1) est couplée, en réponse à une sélection effectuée par des moyens interactifs (3) entre l'utilisateur et ledit système (1), à une deuxième base de données mémorisée dans ledit système (1) qui comprend des données géomarketing représentatives de cartes géographiques pour pondérer des pixels (301, 302, 303) regroupés dans des contours, le coefficient de pondération au sein des contours dépendant notamment de probabilités de service, fonctions du niveau de champ dans le réseau, et du type de sursol.

10. Procédé selon l'une des revendications 7 à 9, dans lequel une carte du trafic à écouler (31) est générée par les moyens de calcul (1) à partir de l'exploitation et du couplage des données de la carte de répartition du trafic (30) avec les données de progression de trafic mémorisées dans une base de données (24) des moyens de mémorisation (2).

11. Procédé selon la revendication 10, dans lequel une phase de modélisation (61) de la couverture radio est paramétrée à l'aide de données, mémorisées dans le système (1), représentatives d'au moins un type de station radio et comprend les étapes suivantes qui s'appliquent à la zone géographique préalablement sélectionnée :

   - sélection de données et paramètres de détermination de la zone de couverture radio correspondante dans un fichier (26) de couverture des moyens de mémorisation (2) dudit système (1), lesdits paramètres comprenant un pas de calcul de couverture,
   - maillage sur ladite zone géographique sélectionnée des cellules de couverture associées à ladite zone de couverture radio, de façon à déterminer la capacité en trafic au sein de chaque cellule.

12. Procédé selon la revendication 11, dans lequel une étape d'identification de sous-zones à densifier est effectuée par les moyens de calcul (11) dudit système informatique (1) à la suite de la phase de modélisation (61) de la couverture radio, par comparaison pour chaque pixel (301, 302, 303) entre les données de trafic à écouler et les données représentatives de la capacité en trafic.

13. Procédé selon la revendication 11, dans lequel une étape d'identification de sous-zones de réseau à densifier est effectuée par les moyens de calcul (11) dudit système informatique (1) à la suite de la phase de modélisation (61) de la couverture radio, par comparaison pour chaque contour entre le trafic à écouler et la capacité en trafic, la différence entre trafic à écouler et capacité en trafic dépassant un seuil déterminé au sein desdites sous-zones.

14. Procédé selon l'une quelconque des revendications 11 à 13, dans lequel une étape d'identification de sous-zones à surplus de capacité est effectuée par les moyens de calcul (11) dudit système informatique (1) à la suite de la phase de modélisation (61) de la couverture radio, par comparaison pour chaque pixel (301, 302, 303) entre le trafic à écouler et la capacité en trafic.

15. Procédé selon l'une quelconque des revendications 12 à 14, dans lequel la différence entre trafic écoulé et capacité en trafic dans une sous-zone est réduite par ajustement, ajout ou suppression par l'utilisateur d'au moins un équipement d'émission réception situé dans la cellule la plus performante, dite serveur principal, pour ladite sous-zone, déclenchant une reconfiguration de la modélisation du réseau sur le système informatique (1) et une mémorisation de la modification correspondante.

16. Système informatique (1) pour la mise en oeuvre du procédé selon l'une quelconque des revendications 1 à 15, comportant des moyens de mémorisation (2), des moyens de sélection (12) et des moyens de calcul (11), lesdits moyens de mémorisation (2) comportant dans une première mémoire (21) des données représentatives de zones géographiques découpées en une pluralité de points ou pixels (301, 302, 303) selon le découpage dudit réseau et dans une seconde mémoire (22) des données représentatives du trafic d'un réseau de radiocommunication à au moins une tranche horaire déterminée audit réseau, le dit système (1) étant **caractérisé en ce qu'**il comporte :

   - des moyens interactifs (3) entre l'utilisateur et ledit système (1), reliés aux moyens de sélection (12) pour sélectionner et afficher au moins une desdites zones géographiques,
   - des moyens de superposition à ladite zone géographique sélectionnée de données représentatives du trafic à une tranche horaire déterminée pour former au moins une carte de répartition (30) du trafic, affichée par lesdits moyens interactifs (3),

- des moyens d'extraction et de mise en table (10), à partir de données fournies par des moyens compteurs (4) et extraites d'au moins un centre de supervision des équipements (OMC), de séries de mesures en fonction des zones géographiques et des tranches horaires.

**17.** Système informatique (1) selon la revendication 16, dans lequel lesdites données représentatives du trafic comprennent les disponibilités du spectre de fréquence, des mesures quantitatives et qualitatives du trafic des abonnés, lesdites mesures incluant :

- la densité moyenne du trafic (dmte) en tout point de la zone,
- le taux de blocage d'accès au réseau (tbar) en tout point de ladite zone,
- le nombre de débuts d'appel (nda) en tout point de la zone.

**18.** Système informatique (1) selon la revendication 16 ou 17, dans lequel lesdits moyens de calcul (11) sont reliés aux moyens de mémorisation (2) pour calculer, à partir desdites données représentatives du trafic, la valeur du trafic écoulé en tout point d'une zone géographique sélectionnée par lesdits moyens de sélection (12).

**19.** Système informatique (1) selon l'une quelconque des revendications 16 à 18, dans lequel lesdits moyens de mémorisation (2) comprennent des mémoires pour stocker respectivement au moins un fichier (23) contenant des données de géomarketing, au moins un fichier (26) contenant des données de détermination de la couverture radio du réseau, au moins un fichier (24) de données représentatives de la progression estimée du trafic en tout point ou pixel (301, 302, 303) du réseau, et au moins un fichier de configuration (25) comprenant des paramètres d'entrée saisis par l'utilisateur par l'intermédiaire desdits moyens interactifs (3), lesdites données de géomarketing comprenant des éléments de pondération de chacun des pixels (301, 302, 303), notamment des probabilités de service, fonctions du niveau de champ dans le réseau, et différents types de sursol.

**20.** Système informatique (1) selon la revendication 19, dans lequel lesdits moyens de calcul (11) sont reliés à des moyens d'extraction (13) des données du fichier (23) de données marketing et/ou du fichier (24) de données de progression du trafic pour calculer en tout point de ladite zone sélectionnée la valeur du trafic à écouler, l'ensemble des valeurs du trafic à écouler de la zone sélectionnée étant stocké dans lesdits moyens de mémorisation (2).

**21.** Système informatique selon la revendication 20, dans lequel lesdites données de détermination de la couverture radio du réseau comprennent des données représentatives d'au moins un type de station radio, lesdits moyens de sélection (12) sélectionnant les données représentatives de zones de couverture radio et les paramètres d'entrée correspondant à la zone sélectionnée pour permettre aux moyens de calcul (11) de fournir la capacité en trafic en tout point de ladite zone.

**22.** Système informatique selon la revendication 21, dans lequel lesdits moyens de calcul (11) comprennent un module de comparaison des valeurs entre le trafic à écouler et la capacité en trafic, en tout point d'une zone sélectionnée par lesdits moyens de sélection (12), permettant la détermination de sous-zones de réseau à densifier.

**23.** Système informatique selon l'une quelconque des revendications 19 à 22, dans lequel les paramètres d'entrée saisis par l'intermédiaire d'une interface utilisateur/système des moyens interactifs (3) comprennent notamment un pas de calcul de couverture.

**Patentansprüche**

**1.** Verfahren zum Erzeugen, Verwalten und Nutzen von Karten zum Verteilen des Verkehrs eines Mobilfunkkommunikationsnetzes, bestimmt für die Verbreitung der Funkabdeckung eines zellularen Funktelefonienetzes mithilfe eines Computersystems (1), das Daten, die für geographische Zonen repräsentativ sind, die in mehrere Punkte oder Pixel (301, 302, 303) gemäß der Unterteilung des genannten Netzes unterteilt sind, und Daten speichert, die für den Verkehr in dem Funkkommunikationsnetz von Abonnenten des genannten Netzes repräsentativ sind, **dadurch gekennzeichnet, dass** die genannten für den Verkehr in dem Funkkommunikationsnetz repräsentativen Daten quantitative und qualitative Messwerte des Verkehrs von Abonnenten auf dem Netzwerk umfassen, wobei die genannten Messwerte wenigstens einem bestimmten Zeitintervall entsprechen, wobei das genannte Verfahren die folgenden Schritte beinhaltet:

- Auswählen (50) wenigstens einer geographischen Zone durch interaktive Mittel (3) zwischen dem Benutzer und dem genannten System,
- Gewinnen (51) und Nutzen von Daten durch das genannte System (1), die für den Verkehr repräsentativ sind, der der genannten gewählten geographischen Zone und einem bestimmten Zeitintervall entspricht, um durch Nutzen dieser Daten durch das Computersystem wenigstens eine Karte (30) zum Verteilen des Verkehrs des Funkkommunikationsnetzes zu bilden.

2. Verfahren nach Anspruch 1, bei dem die Daten, die für den Verkehr in dem Funkkommunikationsnetz repräsentativ sind, Daten umfassen, die von Messmitteln (4) geliefert und von wenigstens einem Betriebs- und Überwachungszentrum (OMC) mit Extraktions- und Tabelliermitteln (10) des genannten Computersystems (1) extrahiert werden.

3. Verfahren nach Anspruch 2, **dadurch gekennzeichnet, dass** jeder in dem Computersystem (1) gespeicherten geographischen Zone mehrere quantitative und qualitative Verkehrmesswertserien entsprechen, wobei jede Messwertserie einem anderen Zeitintervall entspricht, wobei die Klassifizierung der genannten Messwertserien in Abhängigkeit von geographischen Zonen und von Zeitintervallen durch die genannten Extraktions- und Tabelliermittel (10) in jeweiligen spezifischen Tabellen (221, 222, 223) erfolgt, die in einem Speicher (42) des Computersystems (1) gespeichert sind.

4. Verfahren nach einem der Ansprüche 1 bis 3, in dem die für den Verkehr repräsentativen genannten Daten die Verfügbarkeit des Frequenzspektrums für jede geographische Zone umfassen, wobei die genannten quantitativen und qualitativen Messwerte des Verkehrs von Abonnenten insbesondere, für jede geographische Zone, für ein bestimmtes Zeitintervall Folgendes umfassen:

- die mittlere Dichte des bewältigten Verkehrs (dtme) an jedem Punkt der Zone,
- die Netzzugangssperrrate (tbar) an jedem Punkt der genannten Zone.

5. Verfahren nach Anspruch 4, bei dem die genannten quantitativen und qualitativen Messwerte des Verkehrs von Abonnenten ferner, für jede geographische Zone, für ein bestimmtes Zeitintervall, die Anzahl von Rufeinleitungen (nda) an jedem Punkt der Zone umfassen.

6. Verfahren nach einem der Ansprüche 1 bis 5, bei dem das genannte Computersystem (1) ein Werteniveau des Verkehrs (nvt) von Abonnenten an jedem Punkt der gewählten geographischen Zone berechnet, wobei das genannte Verkehrswerteniveau (nvt) in einer Verkehreinheit ausgedrückt wird, die für die Belegung von Funkressourcen repräsentativ ist, wobei die Pixel (301, 302, 303) auf der genannten Zone auf andere Weise je nach dem Werteniveau des bewältigten Verkehrs für das Pixel repräsentiert werden.

7. Verfahren nach einem der Ansprüche 1 bis 6, wobei eine in dem genannten Computersystem (1) gespeicherte Karte (30) der Verteilung des Verkehrs des Funkkommunikationsnetzes als Reaktion auf eine Auswahl, die von interaktiven Mitteln (3) zwischen dem Benutzer und dem genannten System (1) getroffen wird, mit einer in dem genannten System gespeicherten ersten Datenbank gekoppelt (53) ist, die Daten umfasst, die für den geschätzten Fortschritt des Verkehrs im Innern jedes Pixels repräsentativ sind, wobei das genannte System (1) in der genannten ersten Datenbank die Daten auswählt, die der genannten Karte (30) zum Verteilen von gewähltem Verkehr entsprechen, um durch die Rechenmittel (11) des genannten Systems (1) den im Innern von jedem der Pixel (301, 302, 303) zu bewältigenden Verkehr zu berechnen.

8. Verfahren nach Anspruch 7, bei dem die Daten, die für den geschätzten Fortschritt des Verkehrs repräsentativ sind, für jedes Pixel (301, 302, 303) einer Gewichtung insbesondere in Abhängigkeit von Service-Wahrscheinlichkeiten in Verbindung mit der Feldstärke in dem Netz und dem Überbauungsflächentyp entsprechen, wobei das Computersystem (1) diese Gewichtung für jedes Pixel (301, 302, 303) bewirkt und speichert.

9. Verfahren nach einem der Ansprüche 1 bis 6, bei dem eine in dem genannten Computersystem (1) gespeicherte Karte (30) zum Verteilen des Verkehrs als Reaktion auf eine Auswahl, die von interaktiven Mitteln (3) zwischen dem Benutzer und dem genannten System (1) getroffen wird, mit einer zweiten Datenbank gekoppelt ist, die in dem genannten System (1) gespeichert ist, das Geomarketingdaten umfasst, die für geographische Karten repräsentativ sind, um in Konturen gruppierte Pixel (301, 302, 303) zu gewichten, wobei der Gewichtungskoeffizient im Innern der Konturen insbesondere von Service-Wahrscheinlichkeiten abhängig ist, in Abhängigkeit von der Feldstärke in dem Netz und dem Überbauungsflächentyp.

10. Verfahren nach einem der Ansprüche 7 bis 9, bei dem eine Karte des zu bewältigenden Verkehrs (31) von den Rechenmitteln (1) auf der Basis der Nutzung und Kopplung von Daten der Verkehrsverteilungskarte (30) mit den Verkehrsfortschrittsdaten erzeugt wird, die in einer Datenbank (24) der Speichermittel (2) gespeichert sind.

11. Verfahren nach Anspruch 10, wobei eine Funkabdeckungsmodellierungsphase (19) mithilfe von in dem System (1) gespeicherten Daten parametrisiert wird, die für wenigstens einen Funkstationstyp repräsentativ sind, mit den folgenden Schritten, die sich auf die zuvor gewählte geographische Zone beziehen:

   - Auswählen von Daten und Parametern zum Bestimmen der entsprechenden Funkabdeckungszone in einer Abdeckungsdatei (26) von Speichermitteln (2) des genannten Systems (1), wobei die genannten Parameter einen Abdeckungsberechnungsschritt umfassen,
   - Vernetzen der mit der genannten Funkabdeckungszone assoziierten Abdeckungszellen auf der genannten gewählten geographischen Zone, um die Verkehrskapazität im Innern von jeder Zelle zu bestimmen.

12. Verfahren nach Anspruch 11, bei dem ein Schritt des Identifizierens von zu verdichtenden Teilzonen durch die Rechenmittel (11) des genannten Computersystems (1) nach der Funkabdeckungsmodellierungsphase (61) durch einen Vergleich, für jedes Pixel (301, 302, 303), zwischen den Daten von zu bewältigendem Verkehr und den für die Verkehrskapazität repräsentativen Daten erfolgt.

13. Verfahren nach Anspruch 11, bei dem ein Schritt des Identifizierens von zu verdichtenden Netzteilzonen durch die Rechenmittel (11) des genannten Computersystems (1) nach der Funkabdeckungsmodellierungsphase (61) durch einen Vergleich, für jede Kontur, zwischen dem zu bewältigenden Verkehr und der Verkehrskapazität erfolgt, wobei die Differenz zwischen dem zu bewältigenden Verkehr und der Verkehrskapazität eine bestimmte Schwelle im Innern der genannten Teilzonen übersteigt.

14. Verfahren nach einem der Ansprüche 11 bis 13, bei dem ein Schritt des Identifizierens von Teilzonen über die Kapazität hinaus durch die Rechenmittel (11) des genannten Computersystems (1) nach der Funkabdeckungsmodellierungsphase (61) durch einen Vergleich, für jedes Pixel (301, 302, 303), zwischen dem zu bewältigenden Verkehr und der Verkehrskapazität erfolgt.

15. Verfahren nach einem der Ansprüche 12 bis 14, bei dem die Differenz zwischen dem bewältigten Verkehr und der Verkehrskapazität in einer Teilzone durch Justieren, Hinzufügen oder Unterdrücken, durch den Benutzer, von wenigstens einem Sende-/Empfangsgerät reduziert wird, das sich in der leistungsstärksten Zelle, Hauptserver genannt, für die genannte Teilzone befindet, wodurch eine Umkonfiguration der Modellierung des Netzes auf dem Computersystem (1) und eine Speicherung der entsprechenden Modifikation ausgelöst wird.

16. Computersystem (1) zum Ausführen des Verfahrens nach einem der Ansprüche 1 bis 15, das Speichermittel (2), Auswahlmittel (12) und Rechenmittel (11) umfasst, wobei die genannten Speichermittel (2) in einem ersten Speicher (21) Daten umfassen, die für geographische Zonen repräsentativ sind, die in mehrere Punkte oder Pixel (301, 302, 303) gemäß der Unterteilung des genannten Netzes unterteilt sind, und in einen zweiten Speicher (22) von Daten, die für den Verkehr eines Funkkommunikationsnetzes repräsentativ sind, mit wenigstens einem bestimmten Zeitintervall an dem genannten Netz, wobei das genannte System (1) **dadurch gekennzeichnet ist, dass** es Folgendes umfasst:

   - interaktive Mittel (3) zwischen dem Benutzer und dem genannten System (1), verbunden mit den Auswahlmitteln (12) zum Auswählen und Anzeigen von wenigstens einer der genannten geographischen Zonen,
   - Mittel zum Überlagern der genannten gewählten geographischen Zone mit Daten, die für den Verkehr in einem bestimmten Zeitintervall repräsentativ sind, zum Bilden wenigstens einer Verkehrsverteilungskarte (30), angezeigt durch die genannten interaktiven Mittel (3),
   - Extraktions- und Tabelliermittel (10), auf der Basis von Daten, die von Messmitteln (4) geliefert und von wenigstens einem Betriebs- und Überwachungszentrum (OMC) extrahiert werden, von Messwertserien in Abhängigkeit von den geographischen Zonen und den Zeitintervallen.

17. Computersystem (1) nach Anspruch 16, in dem die genannten Daten, die für den Verkehr repräsentativ sind, die Verfügbarkeiten der Frequenzspektren, der quantitativen und qualitativen Messwerte des Verkehrs von Abonnenten umfassen, wobei die genannten Messwerte Folgendes umfassen:

   - die mittlere Dichte des Verkehrs (dmte) an jedem Punkt der Zone,
   - die Netzzugangssperrrate (tbar) an jedem Punkt der genannten Zone,

- die Anzahl von Rufeinleitungen (nda) an jedem Punkt der Zone.

**18.** Computersystem (1) nach Anspruch 16 oder 17, in dem die genannten Rechenmittel (11) mit den Speichermitteln (2) verbunden sind, um auf der Basis der genannten den Verkehr repräsentierenden Daten den Wert des bewältigten Verkehrs an jedem Punkt einer von den Auswahlmitteln (12) gewählten geographischen Zone zu berechnen.

**19.** Computersystem (1) nach einem der Ansprüche 16-18, in dem die genannten Speichermittel (2) Speicher umfassen zum jeweiligen Speichern von: wenigstens einer Datei (23), die Geomarketingdaten enthält, wenigstens einer Datei (26), die Daten zum Bestimmen der Funkabdeckung des Netzes enthält, wenigstens einer Datei (24) mit Daten, die für den geschätzten Fortschritt des Verkehrs an jedem Punkt oder Pixel (301, 302, 303) des Netzes repräsentativ sind, und wenigstens einer Konfigurationsdatei (25), die Eingangsparameter umfasst, die vom Benutzer mittels der genannten interaktiven Mittel (3) erfasst wurden, wobei die genannten Geomarketingdaten Elemente zum Gewichten jedes der Pixel (301, 302, 303), insbesondere von Service-Wahrscheinlichkeiten, in Abhängigkeit von der Feldstärke im Netz und von verschiedenen Überbauungsflächentypen umfassen.

**20.** Computersystem (1) nach Anspruch 19, in dem die genannten Rechenmittel (11) mit Mitteln (13) zum Extrahieren der Daten der Datei (23) von Marketingdaten und/oder der Datei (24) von Verkehrsfortschrittsdaten zum Berechnen, an jedem Punkt der genannten gewählten Zone, des Wertes des zu bewältigenden Verkehrs verbunden sind, wobei alle Werte des zu bewältigenden Verkehrs der gewählten Zone in den genannten Speichermitteln (2) gespeichert sind.

**21.** Computersystem nach Anspruch 20, in dem die genannten Daten zum Bestimmen der Funkabdeckung des Netzes Daten umfassen, die für wenigstens einen Funkstationstyp repräsentativ sind, wobei die genannten Auswahlmittel (12) die für Funkabdeckungszonen repräsentativen Daten und die der gewählten Zone entsprechenden Eingangsparameter auswählen, um es zuzulassen, dass die Rechenmittel (11) die Verkehrskapazität an jedem Punkt der genannten Zone liefern.

**22.** Computersystem nach Anspruch 21, in dem die genannten Rechenmittel (11) ein Modul zum Vergleichen der Werte zwischen dem zu bewältigenden Verkehr und der Verkehrskapazität an jedem Punkt einer gewählten Zone durch die genannten Auswahlmittel (12) umfassen, so dass zu verdichtende Netzteilzonen bestimmt werden können.

**23.** Computersystem nach einem der Ansprüche 19-22, in dem die Eingangsparameter, die mittels einer Benutzer/System-Schnittstelle der interaktiven Mittel (3) erfasst wurden, insbesondere einen Abdeckungsberechnungsschritt umfassen.

**Claims**

**1.** Method for creating, managing and implementing traffic distribution maps in a mobile radio communication network, designed for deployment of the radio coverage of a cellular radio telephone network, by means of a data-processing system (1) storing data representative of geographical areas divided into a plurality of dots or pixels (301, 302, 303) according to the division of said network, from the data representative of the traffic in the radio communications network of the subscribers of said network, **characterised in that** said data representative of the traffic in the radio communications network comprise quantitative and qualitative measurements of the traffic of the subscribers on the network, said measurements corresponding to at least one predetermined period of time, said method comprising the following steps:

- selection (50) of at least one geographical area by interactive means (3) between the user and said system,
- retrieval (51) and utilisation by said system (1) of data representative of the traffic corresponding to said selected geographical area and to a predetermined period of time to form at least one map (30) of the distribution of the traffic in the radio communications network through the implementation of these data by the data-processing system.

**2.** Method according to claim 1, in which the data representative of the traffic in the radio communications network comprise data supplied by counting means (4) and extracted from at least one equipment operations monitoring centre (OMC) by extracting and tabulating means (10) of said data-processing system (1).

**3.** Method according to claim 2, **characterised in that** for each geographical area stored in the data-processing system (1) there is a corresponding plurality of series of quantitative and qualitative measurements of the traffic, each series of measurements corresponding to a different period of time, the collating of said series of measurements according to the geographical areas and the periods of time being carried out by said extracting and tabulating means (10) in specific representative tables (21, 222, 223) stored in a memory (22) of the data-processing system (1).

4. Method according to any one of claims 1 to 3, in which said data representative of the traffic comprise the availability of the frequency spectrum for each geographical area, said quantitative and qualitative measurements of the traffic of the subscribers comprising in particular for each geographical area and for a predetermined period of time:

- the average density of the past traffic flow (dmte) at any point in the area,
- the rate of blockage of access to the network (tbar) at any point in said area.

5. Method according to claim 4, in which said quantitative and qualitative measurements of the traffic of the subscribers also comprise for each geographical area and for a predetermined period of time the number of call starts (nda) at any point in the area.

6. Method according to any one of claims 1 to 5, in which said data-processing system (1) calculates a traffic level value (nvt) of the subscribers at any point in the selected geographical area, said traffic level value (nvt) being expressed in a traffic unit representative of the occupation of radio resources, the pixels (301, 302, 303) being represented in said area in a different manner according to the past traffic level value for the pixel.

7. Method according to any one of claims 1 to 6, in which a map (30) of the distribution of the traffic of the radio communications network stored by said data-processing system (1) is coupled (53), in response to a selection made by interactive means (3) between the user and said system (1), with a first data base stored in said system which comprises data representative of the estimated progression of the traffic within each of the pixels, said system (1) selecting from said first data base the data corresponding to said selected traffic distribution map (30) to calculate, using the calculating means (11) of said system (1), the future traffic flow within each of the pixels (301, 302, 303).

8. Method according to claim 7, in which the data representative of the estimated progression of the traffic correspond for each pixel (301, 302, 303) to a weighting according to in particular probabilities of service linked to the field level in the network, and the type of ground surface, the data-processing system (1) allocating and storing this weighting for each pixel (301, 302, 303).

9. Method according to any one of claims 1 to 6, in which a traffic distribution map (30) stored by said data-processing system (I) is coupled, in response to a selection made by interactive means (3) between the user and said system (1), with a second data base stored in said system (1) which comprises geomarketing data representative of geographical maps to weight pixels (301, 302, 303) grouped in contours, the coefficient of weighting within the contours depending in particular on probabilities of service, according to the field level in the network, and the type of ground surface.

10. Method according to one of claims 7 to 9, in which a map of the future traffic flow (31) is generated by the calculating means (11) from the implementation and the coupling of the data of the traffic distribution map (30) with the traffic progression data stored in a data base (24) of the storing means (2).

11. Method according to claim 10, in which a phase for modelling (61) of the radio coverage is parameterised with the aid of data stored in the system (1) representative of at least one type of radio station and comprises the following steps which are applied to the previously selected geographical area:

- selection of data and parameters for determining the corresponding area of radio coverage from a file (26) for coverage in the storing means (2) of said system (1), said parameters comprising a step of calculating coverage,
- overlaying the cells for coverage associated with said area of radio coverage over said selected geographical area so as to determine the traffic capacity within each cell.

12. Method according to claim 11, in which a step of identifying sub-areas to be increased in density is carried out by the calculating means (11) of said data-processing system (1) following the phase for modelling (61) of the radio coverage by comparing the data for future traffic flow and the data representative of the traffic capacity for each pixel (301, 302, 303).

**13.** Method according to claim 11, in which a step of identifying network sub-areas to be increased in density is carried out by the calculating means (11) of said data-processing system (1) following the phase for modelling (61) of the radio coverage by comparing the future traffic flow and the traffic capacity for each contour, the difference between future traffic flow and traffic capacity exceeding a predetermined threshold within said sub-areas.

**14.** Method according to any one of claims 11 to 13, in which a step of identifying sub-areas with surplus capacity is carried out by the calculating means (11) of said data-processing system (1) following the phase for modelling (61) of the radio coverage by comparing the future traffic flow and the traffic capacity for each pixel (301, 302, 303).

**15.** Method according to any one of claims 12 to 14, in which the difference between past traffic flow and traffic capacity in a sub-area is reduced by the adjustment, addition or elimination by the user of at least one transmitting and receiving unit located in the cell with the best performance, designated the main server, for said sub-area, triggering a reconfiguration of the modelling of the network on the data-processing system (1) and storage of the corresponding modification.

**16.** Data-processing system (1) for implementing the method according to any one of claims 1 to 15, comprising storing means (2), selecting means (12) and calculating means (11), said storing means (2) comprising in a first memory (21) of data representative of geographical areas divided into a plurality of dots or pixels (301, 302, 303) according to the division of said network, and in a second memory (22) of data representative of the traffic of a radio communications network for at least one predetermined period of time in said network, said system (1) being **characterised in that** it comprises:

- interactive means (3) between the user and said system (1), connected to the selecting means (12) for selecting and displaying at least one of said geographical areas,
- means for superimposing over said selected geographical area data representative of the traffic for a predetermined period of time to form at least one traffic distribution map (30) displayed by said interactive means (3),
- means (10) for extracting and tabulating series of measurements, according to the geographical areas and the periods of time, from data supplied by counting means (4) and extracted from at least one equipment operations monitoring centre (OMC).

**17.** Data-processing system (1) according to claim 16, in which said data representative of the traffic comprise the availabilities of the frequency spectrum, quantitative and qualitative measurements of the traffic of the subscribers, said measurements including:

- the average density of the past traffic flow (dmte) at any point in the area,
- the rate of blockage of access to the network (tbar) at any point in said area,
- the number of call starts (nda) at any point in the area.

**18.** Data-processing system (1) according to claim 16 or 17, in which said calculating means (11) are connected to the storing means (2) to calculate, from said data representative of the traffic, the value of the past traffic flow at any point in a geographical area selected by said selecting means (12).

**19.** Data-processing system (1) according to any one of claims 16 to 18, in which said storing means (2) comprise memories for storing respectively at least one file (23) containing geomarketing data, at least one file (26) containing data for determining the radio coverage of the network, at least one file (24) of data representative of the estimated progression of the traffic at any point or pixel (301, 302, 303) of the network, and at least one configuration file (25) comprising input parameters entered by the user through the intermediary of said interactive means (3), said geomarketing data comprising elements for weighting of each of the pixels (301, 302, 303), in particular probabilities of service linked to the field level in the network, and different types of ground surface.

**20.** Data-processing system (1) according to claim 19, in which said calculating means (11) are connected to extracting means (13) for extracting data from the file (23) of marketing data and/or from the file (24) of data on progression of the traffic to calculate the value of the future traffic flow at any point in said selected area, all the values for the future traffic flow for the selected area being stored in said storing means (2).

**21.** Data-processing system according to claim 20, in which said data for determining the radio coverage of the network comprise data representative of at least one type of radio station, said selecting means (12) selecting the data representative of areas of radio coverage and the input parameters corresponding to the selected area to allow the calculating means (11) to supply the traffic capacity at any point in said area.

22. Data-processing system according to claim 21, in which said calculating means (11) comprise a module for comparing values of the future traffic flow and the traffic capacity, at any point in an area selected by said selecting means (12), allowing the determination of network sub-areas to be increased in density.

23. Data-processing system according to any one of claims 19 to 22, in which the input parameters entered through the intermediary of a user/system interface of the interactive means (3) comprise in particular a step for calculating coverage.

**FIG. 1**

**FIG. 2**

**EP 1 434 453 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0036863 A
- US 5293640 A